# EUROPÄISCHE PATENTSCHRIFT

(11) **EP 2 250 056 B1**
(45) Veröffentlichungstag und Bekanntmachung des Hinweises auf die Patenterteilung: **04.01.2012**
(21) Anmeldenummer: 09712915.9
(22) Anmeldetag: 16.02.2009
(51) Int. Cl.: B60T 8/1766, B60T 8/26

(54) **TECHNIK ZUR ELEKTRONISCHEN BREMSKRAFTVERTEILUNG BEI EINER MIT EINER HYDRAULISCHEN BREMSKRAFTVERSTÄRKUNG AUSGERÜSTETEN FAHRZEUGBREMSANLAGE**
TECHNOLOGY FOR THE ELECTRONIC BRAKE FORCE DISTRIBUTION IN A VEHICLE BRAKE SYSTEM EQUIPPED WITH A HYDRAULIC BRAKE SERVO
TECHNIQUE DE RÉPARTITION ÉLECTRONIQUE DE LA FORCE DE FREINAGE POUR UN SYSTÈME DE FREINAGE DE VÉHICULE ÉQUIPÉ D'UNE AMPLIFICATION HYDRAULIQUE DE LA FORCE DE FREINAGE

(30) Priorität: 22.02.2008 DE 102008010704
(43) Veröffentlichungstag der Anmeldung: 17.11.2010
(73) Patentinhaber: Lucas Automotive GmbH, 56070 Koblenz (DE)
(72) Erfinder: KNECHTGES, Josef, 56727 Mayen (DE)
(74) Vertreter: Röthinger, Rainer
(86) Internationale Anmeldenummer: PCT/EP2009/001059
(87) Internationale Veröffentlichungsnummer: WO 2009/103468

(56) Entgegenhaltungen:
- EP-A- 0 343 365
- EP-A- 1 477 379
- DE-A1- 19 626 926
- GB-A- 2 207 206
- GB-A- 2 207 720
- US-A- 5 484 193

## Beschreibung

### Technisches Gebiet

Die Erfindung betrifft eine Fahrzeugbremsanlage. Insbesondere betrifft die Erfindung eine Koordinierung der Funktionen einer hydraulischen Bremskraftverstärkung und einer elektronischen Bremskraftverteilung.

### Technischer Hintergrund

Fahrzeuge, deren Bremsanlagen hydraulisch oder elektrohydraulisch betätigt werden, umfassen üblicherweise mehrere voneinander unabhängige Bremskreise. Die Verwendung von mehreren voneinander unabhängigen Bremskreisen dient dem Zweck der Redundanz, damit das Fahrzeug bremsbar bleibt, auch wenn einer der Bremskreise funktionsunfähig sein sollte. Darüber hinaus lässt sich ein Bremsverhalten des Fahrzeugs dadurch beeinflussen, dass während einer Bremsung die Bremskreise unterschiedlich angesteuert werden. Insbesondere bei schweren Personenkraftwagen und bei Lastkraftwagen ist es üblich, einen Bremskreis für eine Vorderachse und einen anderen Bremskreis für eine Hinterachse vorzusehen. Eine solche Bremskreis-Aufteilung wird auch "Schwarz-Weiß-Aufteilung" oder "Front/Rear Split Brake Circuit" genannt.

In vielen Kraftfahrzeugen wird dem Fahrer eine Betätigung der Bremsanlage mittels Bremskraftverstärkung erleichtert. Dabei wird die vom Fahrer durch eine Betätigung des Bremspedals erzeugte Kraft an einen Hauptbremszylinder weitergeleitet und zusätzlich durch einen Bremskraftverstärker um einen bestimmten Faktor erhöht. Durch diese Unterstützung ist es für den Fahrer leichter, einen hohen Bremsdruck und damit eine hohe Verzögerungswirkung zu erzielen, während durch die unmittelbare Einleitung des vom Fahrer erzeugten Hydraulikdrucks in den Bremskreis das Kraftfahrzeug selbst bei Ausfall der Bremskraftverstärkung bremsbar bleibt.

Die für eine Verstärkung der vom Fahrer aufgebrachten Bremskraft erforderliche Zusatzkraft bezieht beispielsweise ein Unterdruck-Bremskraftverstärker aus einem Unterdruck, welcher üblicherweise durch einen Antriebsmotor des Kraftfahrzeugs in einem Unterdruck-Speicher erzeugt wird. Dabei gibt es eine Reihe von Fällen, in denen ein solcher Bremskraftverstärker nicht oder nicht ausreichend betriebsbereit ist, um eine Bremsung in einem angeforderten Maß zu unterstützen. Beispielsweise entleert sich der Unterdruck-Speicher allmählich, während der Antriebsmotor nicht läuft. Er muss daher nach einem Anlassen des Antriebsmotors erst wieder evakuiert werden, was eine gewisse Zeit in Anspruch nimmt, in welcher die Bremskraftverstärkung ihre Leistung nicht voll entfalten kann. In einem anderen Beispiel ist das Kraftfahrzeug einem geringen äußeren Luftdruck ausgesetzt, beispielsweise in großer Höhe, so dass eine Verstärkungswirkung des Unterdruck-Bremskraftverstärkers auf Grund der geringen Differenz zwischen dem Unterdruck und dem von außen einwirkenden Luftdruck ebenfalls geringer als vom Fahrer angefordert sein kann.

Um derartige Situationen unzureichender Bremskraftverstärkung zu überbrücken, ist es im Stand der Technik bekannt, eine Hydraulikpumpe vorzusehen, welche ausgebildet ist, erforderlichenfalls einen unterstützenden Hydraulikdruck in einem Bremskreis zu erzeugen (Hydraulic Brake Boost, HBB). Durch eine entsprechend leistungsfähige Auslegung der Hydraulikpumpe lässt sich der Unterdruck-Bremskaraftverstärker zusätzlich kleiner dimensionieren, was zu Kosteneinsparungen führt.

Fordert der Fahrer eines Fahrzeugs einen sehr hohen Bremsdruck an, so ist eine über die Vorderachse erzeugbare Bremswirkung durch die dynamische Achslastverteilung des Fahrzeugs beim Bremsen größer als diejenige einer Hinterachse. Räder der Hinterachse weisen daher tendenziell einen höheren Bremsschlupf als Räder an der Vorderachse auf. Einer aus einem übermäßigen Bremsschlupf an Rädern der Hinterachse resultierenden, unerwünschten Reduzierung der Fahrstabilität des Fahrzeugs kann dadurch entgegen gewirkt werden, dass eine elektronische Bremskraftvertellung (EBV) an der Hinterachse aktiv wird. Die EBV verringert den Bremsdruck der Hinterachs-Bremsen mittels einer Ansteuerung geeigneter Ventile Im Hinterachs-Bremskreis, so dass der Bremsschlupf an der Hinterachse begrenzt wird.

In manchen Betriebssituationen versucht die hydraulische Bremskraftverstärkung, einen Bremsdruck in einer Hinterachsbremse zu erhöhen, während die elektronische Bremskraftverteilung den von der Hydraulikpumpe erzeugten Bremsdruck jedoch nicht zu den Bremsen gelangen lässt. Im Ergebnis arbeiten das HBB-System und das EBV-System in diesen Situationen gegeneinander.

EP 1477379 A lehrt eine Bremsanlage mit einem zwischen einem Bremspedal und einem Hauptzylinder angeordneten Bremskraftverstärker sowie einer elektronischen Bremskraftverteilung.

Der Erfindung liegt daher das Problem zugrunde, eine Technik zum Betreiben einer Bremsanlage anzugeben, welche die oben genannten Nachteile vermeidet.

### Abriss der Erfindung

Gemäß einem ersten Aspekt umfasst die Erfindung ein Verfahren zum Durchführen einer elektronischen Bremskraftverteilung bei einer mit einer hydraulischen Bremskraftverstärkung ausgerüsteten Fahrzeug-Bremsanlage, wobei die hydraulische Bremskraftverstärkung zur Unterstützung des Aufbaus eines von einem Fahrer angeforderten Bremsdrucks ausgebildet ist, die schritte des Erfassens eines eine elektronische Bremskraftverteilung erfordernden Zustandes und des Begrenzens der Bremsdruck-Erzeugung der hydraulischen Bremskraftverstärkung nach Maßgabe der elektronischen Bremskraftverteilung. Das Begrenzen der Bremsdruck-Erzeugung kann den Aufbau des Bremsdrucks bis maximal zu einem Grenzwert oder auch das Absenken eines Bremsdrucks auf oder unterhalb des Grenzwertes umfassen.

Die hydraulische Bremskraftverstärkung kann mittels eines HBB-Systems und die elektronische Bremskraftverteilung kann mittels eines EBV-Systems durchgeführt werden. Das Erfassen eines Fahr- oder Fahrzeugzustandes, der eine elektronische Bremskraftverteilung erfordert, kann ein Bestimmen von wenigstens einer der folgenden Größen umfassen: einer Beladung, einer Neigung in einer Längs- oder Querrichtung, einer Glerrate, eines Bremsschlupfs an einer Hinterachse, einem Bremsschlupfs an einer Vorderachse, einer Fahrzeuggeschwindigkeit einer Drehgeschwindigkeit eines Rades und eines Drehwinkels eines Lenkrades des Fahrzeugs.

Die hydraulische Bremskraftverstärkung kann ein elektrisches Ansteuern einer in die Fahrzeugbremsanlage Integrierten Hydraulikpumpe umfassen. Insbesondere kann das Begrenzen des Bremsdruck-Aufbaus durch ein elektrisches Ansteuern der Hydraulikpumpe durchgeführt werden.

In einer Ausführungsform wird die Hydraulikpumpe von einem Elektromotor angetrieben und eine von dem Elektromotor aufgenommene elektrische Leistung wird in geeigneter Weise eingestellt. Dies kann beilspielsweise durch Beeinflussen eines von dem Elektromotor aufgenommenen elektrischen Stroms, einer an dem Elektromotor anliegenden elektrischen Spannung und/oder eines den Elektromotor steuernden Tastverhältnisses einer Pulsweitenmodulation erfolgen. In einer anderen Ausführungsform kann im Rahmen der Ansteuerung ein Förderverhalten der Hydraulikpumpe mittels eines Stellgliedes beeinflusst werden, beispielsweise indem eine Kraft übertragenden Einrichtung zwischen einem Antrieb und der Hydraulikpumpe elektrisch in ihrem Übertragungsverhalten beeinflusst wird. Diese Steuerung kann ebenfalls mittels Beeinflussung eines Stroms, einer Spannung und/oder eines Tastverhältnisses einer Pulsweitenmodulation erfolgen.

Das elektrische Ansteuern der Hydraulikpumpe zur hydraulischen Bremskraftverstärkung kann bei Erreichen oder bei unmittelbar bevorstehendem Erreichen eines Aussteuerungspunkts eines in die Fahrzeugbremsanlage integrierten Bremskraftverstärkers erfolgen. Bei dem Bremskraftverstärker kann es sich um einen Unterdruck- oder um einen pneumatischen Bremskraftverstärker handeln. Der Aussteuerungspunkt gibt denjenigen Betriebszustand eines Bremskraftverstärkers an, in dem die maximale Verstärkungswirkung erzielt wird. Der Aussteuerungspunkt kann in Abhängigkeit verschiedener Parameter (z.B. des gerade maximal erzeugbaren Unterdrucks) variieren.

Die hydraulische Bremskraftverstärkung kann ein elektrisches Ansteuern eines Ventils umfassen, welches eine Hochdruckseite der Hydraulikpumpe von einem fahrerbetätigten Hauptzylinder hydraulisch trennt. Das Ansteuern kann beispielsweise derart erfolgen, dass ein durch die Hydraulikpumpe erzeugter Bremsdruck nicht in den Hauptzylinder (und gegebenenfalls von dort in ein Hydraulikfluid-Reservoir) abgeleitet wird. Dem Ventil kann ein zweites Ventil hydraulisch parallel geschaltet sein, wobei das zweite Ventil eine Druckbegrenzungsfunktion ausübt. Das bedeutet, dass das zweite Ventil sich selbsttätig öffnet, sobald eine voreingestellte Druckdifferenz an seinen beiden Anschlüssen überstiegen wird. Mit Hilfe eines solchen Druckbegrenzungsventils können Schäden durch Überlastung von Teilen der Bremsanlage vermieden werden.

Die hydraulische Bremskraftverstärkung kann weiterhin ein elektrisches Ansteuern eines Ventils umfassen, welches eine Niederdruckseite der Hydraulikpumpe mit einem fahrerbetätigbaren Hauptzylinder hydraulisch verbindet. Da ein Hauptzylinder üblicherweise mit einem Hydraulikfluid-Reservoir verbunden ist, kann auf diese Weise beispielsweise dafür gesorgt werden, dass die Hydraulikpumpe ausreichend Hydraulikfluid ansaugen kann.

Das Begrenzen des Bremsdruck-Aufbaus der hydraulischen Bremskraftverstärkung kann das Erzeugen eines geringeren Unterstützungsbremsdrucks seitens der Hydraulikpumpe im Vergleich zu einem eine elektronische Bremskraftverteilung nicht erfordernden Zustand umfassen. Beispielsweise kann in einem ersten Fahrzeugzustand, der eine elektronische Bremskraftverteilung nicht erfordert der Bremsdruck-Aufbau der hydraulischen Bremskraftverstärkung nur von einer vom Fahrer des Fahrzeugs aufgebrachten oder angeforderten Bremskraft abhängig sein. Dabei kann ein linearer oder anderweitiger Zusammenhang zwischen dem von der hydraulischen Bremskraftverstärkung erzeugten Unterstützungsbremsdruck und der von dem Fahrer eingeleiteten Bremskraft bestehen. Ferner kann ein linearer oder anderweitiger Zusammenhang zwischen dem von dem Fahrer angeforderten Bremsdruck und der von ihm ausgeübten Bremskraft bestehen. In einem zweiten Fahrleugzustand, der eine elektronische Bremskraftverteilung erfordert, kann die Erzeugung des von der hydraulischen Bremskraftverstärkung gelieferten Unterstützungsbremsdrucks auf einen Wert begrenzt sein, der geringer Ist als ein korrespondierender Wert eines Unterstützungsbremsdrucks lm ersten Fahrzeugzustand. Dieser geringere Wert kann demjenigen Wert entsprechen, der bei einer elektronischen BremskraRverbeilung ohne hydraulische Bremskraftverstärkung erzeugt werden würde.

Im Rahmen der elektronischen Bmmskm6er%llung können achsweise unterschiedliche Bremsdrücke elngesteflt werden, wobei das .Begrenzen des Bremsdruck-Aufbaus der hydraulischen Bremskraftverstärkung zumindest an einer Fahrzeug-Hinterachse oder an mehreren Fahrzeug-Hinterachsen durchgeführt wird. Beispielsweise kann einer oder mehreren Fahrzeug-Hinterachsen ein eigener Bremskreis zugeordnet sein, In welchem der Bremsdruck-Aufbau, gesteuert durch die elektronische Bremskraftverteilung, begrenzt wird. Insbesondere kann in einem Fahrzeug mit zwei getrennten Bremskrelsen ein erster Bremskreis einer Vorderachse und ein zweiter Bremskreis einer Hinterachse des Fahrzeugs zugeordnet sein und das Begrenzen des Bremsdruck-Aufbaus nur den zweiten Bremskreis betreffen.

Das Erfassen eines eine elektronische Bremskraftverteilung erfordernden Zustandes kann ein Detektieren eines achsweise unterschiedlichen Bremssschlupfes umfassen. Ein Bremsschlupf kann durch Verarbeitung einer Drehgeschwindlgkeit eines Rades und einer Fahrzeuggeschwindigkeit bestimmt werden. Insbesondere dann, wenn wenigstens ein Hinterrad einen höheren Bremsschlupf als ein Vorderrad aufweist, kann auf einen eine elektronische Bremskraftverteilung erfordernden Zustand geschlossen werden.

Die elektronische Bremskraftverteilung kann der hydraulischen Bremskraftverstär kung ein Drucksignal bereitstellen, welches unterhalb eines Begrenzungsdrucks einem Bremsdruck in einem fährerbetaagbaren Hauptzylinder entspricht. Ist der Begrenzungsdruck erreicht, dann entspricht das Drucksignal dem Begrenzungsdruck. Der Begrenzungsdruck ist dabei ein Bremsdruck, der eine Fahrstabilität des Fahrzeugs sicher stellt. Auf diese Weise kann eine herkömmliche hydraulische Bremskraftverstärkung erfindungsgemäß im Zusammenspiel mit einer elektronischen Bremskraftverteilung eingesetzt werden, ohne weitere Änderungen an der hydraulischen Bremskraftverstärkung zu erfordern.

Gemäß einem zweiten Aspekt wird ein Computerprogrammprodukt mit Programmcodemitteln zur Durchführung der oben beschriebenen Verfahrens zur Verfügung gestellt, wenn das Computerprogrammprodukt auf einer Verarbeitungseinheit (z. B. einem Steuergerät) läuft. Eine solche Verarbeitungseinheit kann die Funktionen des EBV und des HBB steuern. Zusätzlich können weitere bremsbezogene Steuerungen wie ABS und ESP auf der Verarbeitungseinheit ablaufen.

Das Computerprogrammprodukt kann auf einem computerlesbaren Datenträger gespeichert sein. Beispielsweise kann das Computerprogrammprodukt auf einem beweglichen Datenträger, wie beispielsweise einer Diskette, einer Festplatte, einer CD oder DVD, oder auf einem festen Datenträger, wie beispielsweise einem Halbleiterspeicher (etwa ein RAM, ROM, EPROM, EPROM, NOVRAM oder FLASH) gespeichert sein.

Gemäß einem dritten Aspekt wird eine Fahrzeugbremsanlage zur Verfügung gestellt, die einen hydraulischen Bremskraftverstärker, der zur Unterstützung des Aufbaus eines von einem Fahrer angeforderten Bremsdrucks ausgebildet ist, und einen elektronischen Bremskraftverteiler mit einem Detektor zum Erfassen eines eine elektronische Bremskraftverteilung erfordernden Zustandes und einem Begrenzer zum Begrenzen des Bremsdruck-Aufbaus der hydraulischen Bremskraftverstärkung nach Maßgabe der elektronischen Bremskraftverteilung umfasst.

Der Detektor kann beispielsweise wenigstens einen der folgenden Parameter erfassen: eine Beladung, eine Geschwindigkeit, eine Neigung des Fahrzeugs in einer Längs- oder Querrichtung, eine Gierrate, einen Bremsschlupf an einer Hinterachse, einen Bremsschlupf an einer Vorderachse, eine Fahrzeuggeschwindigkeit, eine Drehgeschwindigkeit eines Rades und einen Drehwinkel eines Lenkrades des Fahrzeugs.

Der hydraulische Bremskraftverstärker kann zur Ansteuerung eine Hydraulikpumpe ausgebildet sein. Die Hydraulikpumpe kann eine positive Hydraulikdruckdifferenz zwischen einer zu Radbremsen führenden Hydraulikleitung und einem fahrerbetätigbaren Hauptzylinder bewirken. In einem solchen Fall kann der Begrenzer durch eine Ansteuerungselektronik für die Hydraulikpumpe realisiert sein.

Die Fahrzeugbremsanlage kann ein Ventil umfassen, welches ansteuerbar ist, um eine Hochdruckseite der Hydraulikpumpe von einem fahrerbetätigbaren Hauptzylinder hydraulisch zu trennen. Dieses Ventil kann elektrisch steuerbar sein.

Die Fahrzeugbremsanlage kann ferner ein Ventil umfassen, welches ansteuerbar ist, um eine Niederdruckseite der Hydraulikpumpe mit einem fahrerbetätigbaren Hauptzylinder hydraulisch zu verbinden. Ist der Hauptzylinder seinerseits mit einem Hydraulikfluid-Reservoir verbunden, kann die Hydraulikpumpe auf diesem Weg Hydraulikfluid ansaugen. Ein von der Hydraulikpumpe gefördertes Hydraulikfluid kann alternativ oder zusätzlich hierzu auch aus einer anderen Quelle stammen, beispielsweise aus einem Druckspeicher. Die Steuerung dieses Ventils kann ebenfalls elektrisch erfolgen.

Der hydraulische Bremskraftverstärker kann ein erstes Steuergerät und der elektronische Bremskraftverteiler ein zweites Steuergerät umfassen, wobei zwischen dem ersten Steuergerät und dem zweiten Steuergerät eine Schnittstelle zur Übermittlung von Bremsdruck-Begrenzungsbefehlen vom zweiten Steuergerät an das erste Steuergerät vorgesehen ist. Die Schnittstelle kann beispielsweise eine elektrische Schnittstelle oder eine Datenschnittstelle sein. Die Begrenzungsbefehle können in Form von analogen oder digitalen Daten oder Signalen vorliegen.

Alternativ dazu können Steuermodule des hydraulischen Bremskraftverstärkers und des elektronische Bremskraftverteilers unterschiedliche Funktionsmodule innerhalb eines gemeinsamen Steuergeräts sein. In einer Ausführung kann jedes der Funktionsmodule ein Computerprogramm sein, welches in dem Steuergerät abläuft.

### Kurze Beschreibung der Zeichnungen

Weitere Merkmale und Vorzüge der Erfindung werden nun im Zusammenhang mit einem Ausführungsbeispiel und den beigefügten Zeichnungen beschrieben, in denen:
Fig. 1 eine schematische Darstellung einer Bremsanlage mit hydraulischer Bremskraftverstärkung zeigt;
Fig. 2 einen funktionellen Überblick über eine Bremsanlage mit einer hydraulischen Bremskraftverstärkung und einer elektronischen Bremskraftverteilung zeigt;
Fig. 3 ein schematisches Ablaufdiagramm eines Verfahrens zum Aufbau eines Bremsdrucks zeigt; und
Fig. 4 Verläufe von Bremsdrücken von Radbremsen an einer Vorder- und einer Hinterachse eines Fahrzeugs zeigt.

### Beschreibung eines bevorzugten Ausführungsbeispiels

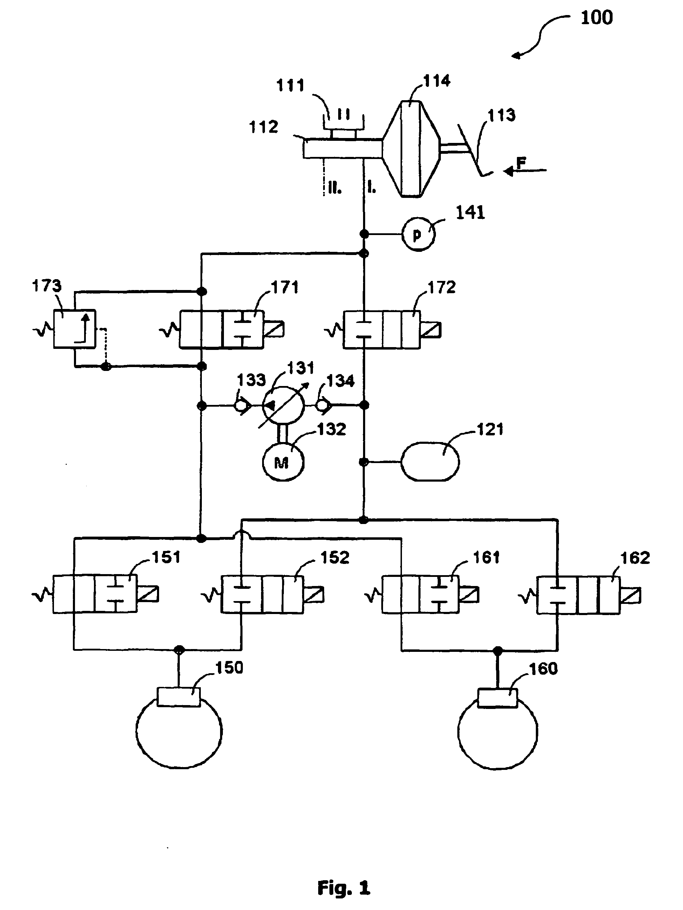

Fig. 1 zeigt in einer schematischen Darstellung eine hydraulische Bremsanlage 100 gemäß einem Ausführungsbeispiel. Die Bremsanlage 100 arbeitet mittels eines Hydraulikfluids, das zum Teil in einem als Reservoir dienenden Behälter 111 bevorratet ist. Zum Erzeugen von Bremsdruck, der durch unter Druck Setzen des Hydraulikfluids entsteht, dient ein Hauptzylinder 112, der vom Fahrer mittels eines Pedals 113 zu betätigen ist, wobei die vom Fahrer eingeleitete Kraft F durch einen Bremskraftverstärker 114 - beispielsweise durch Unterdruck - verstärkt wird.

Von dem Hauptzylinder 112 ausgehend werden ein erster Bremskreis I. und ein zweiter Bremskreis II. versorgt, wobei jedem Bremskreis zwei Radbremsen zugeordnet sind. Die Bremskreise I., II. können im Wesentlichen identisch aufgebaut sein, weshalb hier nur der erste Bremskreis I., der zwei Radbremsen 150 und 160 versorgt, im Detail dargestellt ist. Je nach dem, welche Radbremsen des Fahrzeugs von welchem Bremskreis versorgt werden, ergibt sich entweder eine Vorder-/Hinterachsaufteilung (auch: "Schwarz-Welβ-Aufteilung" oder "Front/Rear Split Brake Circuit"), das heißt, der eine Bremskreis versorgt die Radbremsen der Vorderachse und der andere die der Hinterachse, oder eine diagonale Aufteilung (auch: "Diagonal Split Brake Circuit"), das heißt, jeder Bremskreis versorgt die Radbremse eines Vorderrades und die des diagonal gegenüber liegenden Hinterrades. Im Folgenden wird davon ausgegangen, dass eine Schwarz-Weiß-Aufteilung vorliegt und dass die Radbremsen 150 und 160 auf Räder an einer Hinterachse des Fahrzeugs wirken.

Die hydraulische Verbindung von dem Hauptzylinder 112 zu den Radbremsen 150 und 160 wird von durch Elektromagneten betätigten 2/2-Wegeventilen 151, 152, 161, 162,171 und 172 bestimmt, die im unbetätigten, also elektrisch nicht angesteuerten Zustand die in Fig. 1 dargestellten Grundstellungen einnehmen. Dies bedeutet hier im Einzelnen, dass die Ventile 151, 161 und 171 jeweils ihre Durchflussstellung und die Ventile 152, 162 und 172 jeweils ihre Sperrstellung einnehmen.

Zum Ausführen von Betriebs- oder Normalbremsungen besteht bei den dargestellten Grundstellungen der Ventile 151, 152, 161, 162, 171 und 172 eine unmittelbare hydraulische Verbindung zwischen dem Hauptzylinder 112 und den Radbremsen 150 und 160. Dadurch bewirkt eine Betätigung des Hauptzylinders 112 in den Radbremsen 150 und 160 einen Bremsdruck, dessen Betrag (zunächst ohne Berücksichtigung einer hydraulischen Bremskraftverstärkung) von der vom Fahrer eingeleiteten Kraft F und dem Verstärkungsfaktor des Bremskraftverstärkers 114 abhängt. Ein Drucksensor 141 nimmt einen im Hauptzylinder 112 herrschenden Druck auf und kann verwendet werden, um das Erfordernis eine zusätzlichen hydraulischen Druckverstärkung zu erfassen.

Die Ventile 151, 152, 161, und 162 und ein Druckspeicher 121 gestatten die Implementierung einer Antiblockierregelung (ABS). Die ABS-Funktionalität ist an dieser Stelle nicht weiter von Belang, und dem Fachmann ist bekannt, in welcher Weise die Ventile 151, 152, 161 und 162 angesteuert werden müssen, um fahrzustandsabhängig einen auf die Radbremsen 150 bzw. 160 wirkenden hydraulischen Bremsdruck zu erhöhen, zu halten bzw. zu verringern. Für die folgende Betrachtung der Funktionsweise der Bremsanlage 100 wird davon ausgegangen, dass eine ABS-Funktion nicht aktiviert ist und die Ventile 151, 152, 161 und 162 die in Fig. 1 gezeigten Stellungen einnehmen.

Die Bremsanlage 100 umfasst ferner eine von einem Elektromotor 132 betätigbare, zum Beispiel als Radialkolbenpumpe ausgeführte Hydraulik-Pumpe 131. Diese ist entgegen ihrer Förderrichtung sperrend, wie anhand des Sperrventils 133 an einer Hochdruckseite der Pumpe 131 sowie des Sperrventils 134 an einer Niederdruckseite der Pumpe 131 dargestellt ist. Die Drehzahl des Elektromotors 132 ist regelbar, so dass die Förderleistung der Pumpe 131 eingestellt werden kann. Es ist möglich, dass der Elektromotor 132 gleichzeitig eine Pumpe des hier nicht im Detail dargestellten zweiten Bremskreises II. betätigt.

Wie bereits erläutert, gestattet die Bremsanlage 100 eine hydraulische Bremskraftverstärkung zum Beispiel in Fällen, in denen der Unterdruck-Bremskraftverstärker 114 seinen Aussteuerungspunkt erreicht hat. Zum Durchführen der hydraulischen Bremskraftverstärkung werden die Ventile 171 und 172 derart angesteuert, dass das Ventil 171 seine Sperrstellung und das Ventil 172 seine Durchflussstellung einnimmt Dadurch ist zum Einen der Ausgang der Pumpe 131 von dem Hauptzylinder 112 hydraulisch getrennt, dass heißt, eine unmittelbare hydraulische Verbindung besteht nur noch zwischen dem Ausgang der Pumpe 131 und den Radbremsen 150 und 160. Zum Anderen besteht eine hydraulische Verbindung von der Niederdruckseite der Pumpe 131 zu dem Hauptzylinder 112 bzw. dem Behälter 111, wodurch die Pumpe 131 Hydraulikflüssigkeit aus dem Behälter 111 ansaugen kann, um zusätzlich Bremsdruck in den Radbremsen 150 und 160 zu erzeugen.

Optional und für eine erfindungsgemäße Funktion nicht unbedingt erforderlich ist dem Ventil 171 ein Druckbegrenzungsventil 173 parallel geschaltet. Das Druckbegrenzungsventil 173 sorgt dafür, dass der Bremsdruck, der an der Hochdruckseite der Pumpe 131 erzeugt wird, wenn sich das Ventil 171 in Sperrstellung befindet, ein vorbestimmtes Maß nicht überschreitet. In der in Fig. 1 dargestellten Ausführungsform ist das Druckbegrenzungsventil 173 dazu ausgebildet, den von der Pumpe 131 erzeugten Bremsdruck im Fall einer Fehlfunktion zu begrenzen, um Schäden an der Bremsanlage 100, etwa durch Überbeanspruchung, zu vermeiden.

In einer weiteren Ausführungsform kann das Druckbegrenzungsventil 173 ausgebildet sein, um elektrisch auf einen bestimmten Begrenzungsdruck einstellbar zu sein. Dabei ist die für die Druckbegrenzungsfunktion maßgebende Druckdifferenz, bei der sich das Druckbegrenzungsventil 173 selbsttätig in seine Durchlassstellung überführt, über die elektrische Ansteuerung einstellbar. Als elektrische Ansteuerung dient beispielsweise eine Pulsweitenmodulation, deren Puls/Pause-Verhältnis derart einstellbar ist, dass in dessen Abhängigkeit die für die Druckbegrenzungsfunktion maßgebende Druckdifferenz als Funktion der Pulsweitenmodulation steuer- bzw. regelbar ist.

In einer weiteren, nicht dargestellten Ausführungsform können das Ventil 171 und das Druckbegrenzungsventil 173 in einer Ventilanordnung zusammengefasst werden können. Derartige Ventilanordnungen werden ISO-Ventile genannt. Eine solche Ventilanordnung ist beispielsweise aus der DE 4 439 890 C2 bekannt.

Die Bremsanlage 100 ist ferner dazu geeignet eine elektronische Bremskraftverteilung zu bewirken. Zur elektronischen Bremskraftverteilung kann das Druckbegrenzungsventil 173 unabhängig von einer Ansteuerschaltung der Pumpe 131 angesteuert werden, um im ersten Bremskreis I. einen maximal auf die Radbremsen 150 und 160 wirkenden Bremsdruck, und somit eine maximale an den mit den Radbremsen 150 und 160 verbundenen Rädern wirkende Bremskraft, zu begrenzen, während im zweiten Bremskreise II. (noch) keine derartige Begrenzung durchgeführt wird.

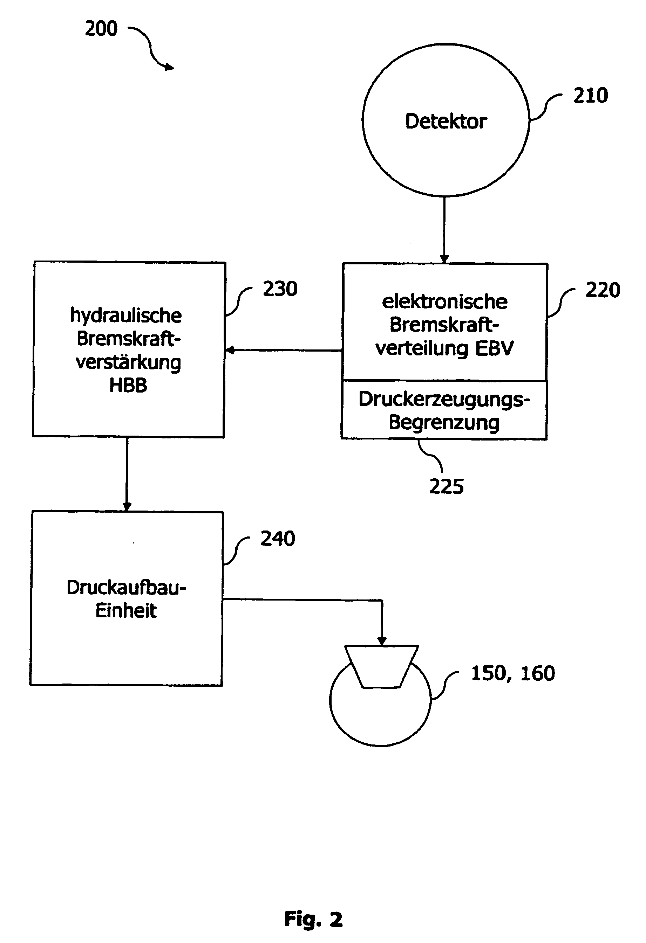

Fig. 2 zeigt einen funktionalen Überblick über eine Bremsanlage 200 mit einer hydraulishen Bremskraftverstärkung 230 und einer elektronischen Bremskraftverteilung 220 wie beispielweise die Bremsanlage 100 gemäß Fig. 1. Die entsprechenden Funktionalitäten 220, 230 können in Steuergeräten oder Steuergerätmodulen Implementiert sein.

Ein Detektor 210 (z.B. ein geeigneter Sensor) nimmt einen Zustand des Fahrzeugs, welches durch die Bremsanlage 200 verzögert wird, auf. Der Detektor 210 kann, wie bereits oben erwähnt, eine Vielzahl unterschiedlicher Messwerte erheben und verarbeiten, beispielsweise eine Beladung, eine Geschwindigkeit, eine Neigung des Fahrzeugs in einer Längs- oder Querrichtung, eine Gierrate, einen Bremsschlupf an einer Hinterachse, einen Bremsschlupf an einer Vorderachse, eine Fahrzeuggeschwindigkeit, eine Drehgeschwindigkeit eines Rades und einen Drehwinkel eines Lenkrades des Fahrzeugs.

Der Detektor 210 ist mit der elektronischen Bremskraftverteilung 220 verbunden und stellt dieser Signale bereit, die den Zustand des Fahrzeugs charakterisieren. Die elektronische Bremskraftverteilung 220 bestimmt, ob der mittels des Detektors 210 bestimmte Zustand eine Verteilung einer Bremskraft erfordert oder nicht, und stellt der hydraulischen Bremskraftverstärkung 230 in Abhängigkeit davon ein Signal bereit, welches auf einen an einer Hinterachse des Fahrzeugs (maximal) einzustellenden Bremsdruck hinweist Diesen einzustellenden Bremsdruck bestimmt die elektronische Bremskraftverteilung 220 mittels einer Druckerzeugungsbegrenzung 225.

In einem Fahrzug ohne EBV kann die hydraulische Bremskraftverstärkung 230 statt mit der elektronischen Bremskraftverteilung 220 mit einem Drucksensor verbunden sein, der einen Bremsdruck in einem Hauptzylinder 112 aufnimmt. In der gezeigten Ausführungsform kann das von der elektronischen Bremskraftverteilung 220 der hydraulischen Bremskraftverstärkung 230 bereitgestellte Signal daher eine Nachbildung eines Drucksensor-Signals sein. Insbesondere kann in einem Zustand des Fahrzeugs, in dem keine Bnemskraftverteilung erforderlich ist, das von der elektronischen Bremskraftverteilung 220 bereitgestellte Signal einem tatsächlichen (etwa mittels des Detektors 210 bestimmten) Bremsdruck entsprechen. In einem Zustand des Fahrzeugs hingegen, in dem eine Bremskraftverteilung erforderlich ist, kann das von der elektronischen Bremskraftverteilung 220 bereitgestellte Signal einem niedrigeren als dem tatsächlichen Bremsdruck entsprechen, und insbesondere kann das Signal einem begrenzten Bremsdruck entsprechen, der sicher stellt, dass die Radbremsen 150, 160 der Hinterachse nicht so stark betätigt werden, dass eine Fahrstabilität des Fahrzeugs gefährdet ist.

Ein Austausch von Daten und/oder Befehlen zwischen der elektronischen Bremskraftverteilung 220 und der hydraulischen Bremsdruckverstärkung 230 kann beispielsweise als eine Datenschnittstelle ausgeführt sein. Insbesondere können die elektronische Bremskraftverteilung 220 und die hydraulische Bremsdruckverstärkung 230 Computerprogramme sein, die auf einer gemeinsamen Verarbeitungseinheit ausgeführt werden. Die Datenschnittstelle kann in diesem Fall rein Software-basiert sein.

Die hydraulische Bremskraftverstärkung 230 steuert dann nach Maßgabe des von der elektronischen Bremskraftverteilung 220 erhaltenen Signals eine Druckaufbau-Einheit 240 an, die einen Bremsdruck für eine oder mehrere Radbremsen 150, 160 an der Hinterachse des Fahrzeugs bereitstellt. Dabei folgt der Bremsdruck an den Radbremsen 150, 160 den Vorgaben der hydraulischen Bremskraftverstärkung 230, die entsprechend dem Fahrzeug-Zustand den Vorgaben der elektronischen Bremskraftverteilung 220 folgt.

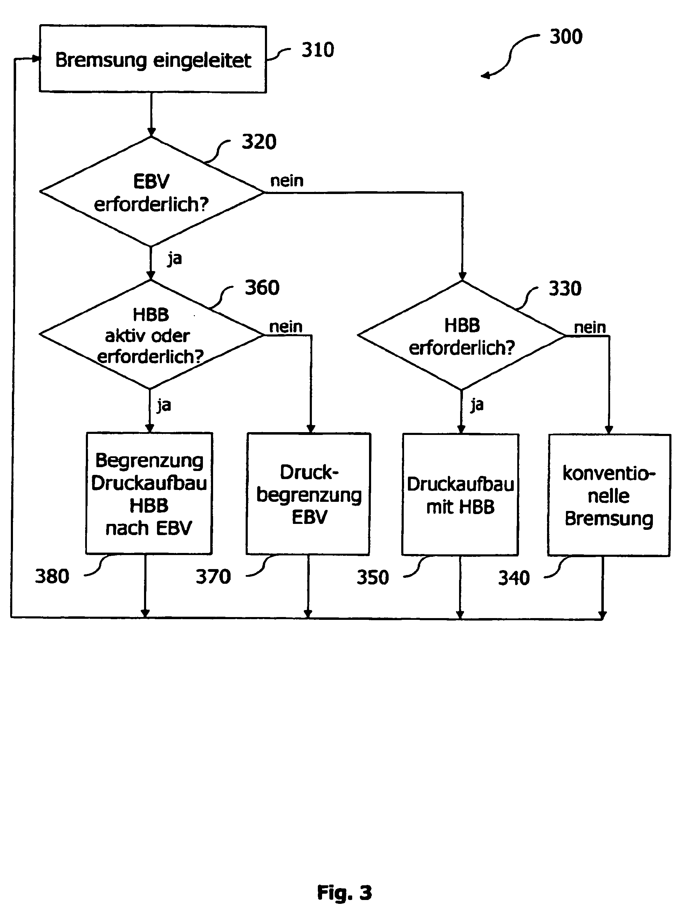

Fig. 3 zeigt ein schematisches Ablaufdiagramm 300 eines Verfahrens zum Aufbau eines Bremsdrucks. Die Darstellung des Verfahrens 300 geht von einer Bremsanlage wie der in Fig. 1 gezeigten Bremsanlage 100 aus. Im Folgenden wird daher wieder auf Elemente der Fig. 1 Bezug genommen.

In einem ersten Schritt 310 wird eine Bremsung eingeleitet. Dies kann beispielsweise durch Betätigen eines Bremspedals durch einen Fahrer durchgeführt werden.

In einem folgenden Schritt 320 wird bestimmt, ob eine elektronische Bremskraftverteilung erforderlich ist. Hierzu wird ein Fahr- und/oder Fahrzeugzustand beispielsweise durch Abtasten und Verarbeiten von Messwerten am Fahrzeug erfasst. Das Erfassen des Fahr- und/oder Fahrzeugzustands kann ein Erfassen einer Fahrzeuggeschwindigkeit, eines Bremsschlupfes an Vorderrädern und/oder an Hinterrädern umfassen. Das Bestimmen, ob eine EBV-Funktionalität erforderlich ist, kann ein Vergleichen eines oder mehrerer Parameter mit zugeordneten Schwellenwerten umfassen.

Wird in Schritt 320 bestimmt, dass eine elektronische Bremskraftverteilung nicht erforderlich ist, so wird anschließend in einem Schritt 330 bestimmt, ob eine hydraulische Bremskraftverstärkung erforderlich ist. Besteht dieses zweite Erfordernis nicht, so erfolgt in einem Schritt 340 eine konventionelle Bremsung, bei der weder eine HBB- noch eine EBV-Funktionalität aktiv ist. Andernfalls wird in einem Schritt 350 ein Bremsdruck entsprechend den konventionellen HBB-Vorgaben aufgebaut

Wird in Schritt 320 hingegen festgestellt, dass eine elektronische Bremskraftverteilung erforderlich ist, so wird in einem folgenden Schritt 360 bestimmt, ob eine hydraulische Bremskraftverstärkung bereits aktiv oder erforderlich ist. Ist dies nicht der Fall, so wird in einem Schritt 370 der auf die Radbremsen 150, 160 an der Hinterachse des Fahrzeugs wirkende Bremsdruck im Rahmen der konvnetionellen EBV-Funktionalität begrenzt, ohne dass eine HBB-Funktionalität aktiviert wird oder ist. Das Begrenzen des Bremsdrucks erfolgt beispielsweise durch entsprechendes Ansteuern der Ventile 171 bzw. 172, der Pumpe 131 und/oder des Elektromotors 132 selektiv im ersten Bremskreis I..

Wird in Schritt 360 hingegen bestimmt, dass auch eine hydraulische Bremskraftverstärkung aktiv oder erforderlich ist, so wird in einem folgenden Schritt 380 der durch die HBB-Funktionalität erzeugte Bremsdruck nach Vorgabe der elektronischen Bremskraftverteilung auf einen Wert begrenzt. Dabei wird die HBB-Funktionalität durch die EBV-Funktionalität wie in Fig. 2 veranschaulicht derart angesteuert, dass ein höherer als ein erforderlicher Bremsdruck durch die Pumpe 131 erst gar nicht erzeugt wird oder, falls ein höherer Bremsdruck bereits eingestellt wurde, der Bremsdruck auf den erforderlichen Bremsdruck abgesenkt wird.

Die Bestimmungen, ob eine elektronische Bremskraftverteilung (Schritt 320) bzw. eine hydraulische Bremskraftverstärkung (Schritte 330, 360) erforderlich ist, können alternativ auch in umgekehrter Reihenfolge oder parallel zueinander durchgeführt werden. Nachdem der Bremsdruck in einem der Schritte 340, 350, 370 oder 380 eingestellt wurde, kehrt das Verfahren zum Schritt 310 zurück, von wo auch die beschriebenen Schritte neu durchlaufen werden können.

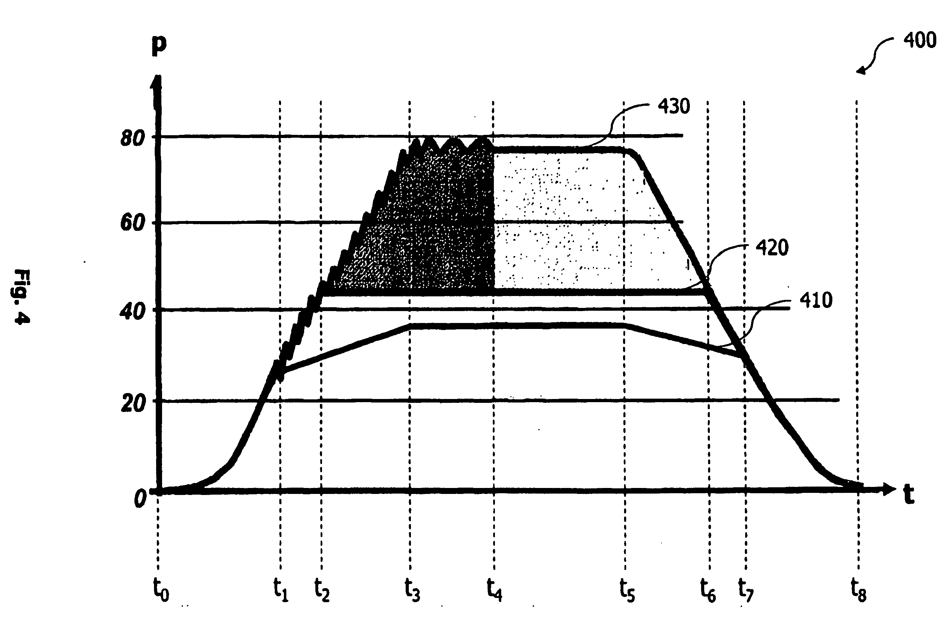

Fig. 4 zeigt einen zeitlichen Verlauf 400 verschiedener Drücke an einer Bremsanlage wie der in Fig. 1 dargestellten Bremsanlage 100. Im Folgenden wird wieder auf Elemente der Fign. 1 und 2 Bezug genommen. Zu Grunde gelegt ist ein Fahrzeug, dessen Bremsanlage über zwei voneinander getrennte Bremskreise verfügt, von denen einer (I.) auf zwei Radbremsen an einer Vorderachse und der andere (II.) auf zwei Radbremsen 150 und 160 an einer Hinterachse wirkt. Weiterhin verfügt die Bremsanlage des Fahrzeugs über einen konventionellen, Unterdruck-gesteuerten Bremskraftverstärker 114. Eine möglicherweise vorhandene ABS- oder ESP-Funktionalität ist in der Darstellung in Fig. 4 nicht berücksichtigt.

Die Kurve 410 beschreibt einen hydraulischen Druck im Hauptzylinder 112 der Bremsanlage 100 des Fahrzeugs. Die Kurve 420 beschreibt einen Bremsdruck an den Hinterradbremsen 150 und 160, während die Kurve 430 einen Bremsdruck an Vorderradbremsen des Fahrzeugs beschreibt. In horizontaler Richtung ist die Zeit aufgetragen, in vertikaler Richtung ein hydraulischer Druck in bar.

Zwischen den Zeitpunkten t₀ und t₁ erfolgt eine Betätigung des Bremspedals 113 mit ansteigender Betätigungskraft durch den Fahrer des Fahrzeugs und eine damit einhergehende, übereinstimmende Erhöhung der drei Drücke 410, 420 und 430.

Zum Zeitpunkt t₁ erreicht der Bremskraftverstärker 114 seinen Ansteuerungspunkt, beispielsweise weil ein ihm zugeordnetes Unterdruck-Reservoir erschöpft ist. Gleichzeitig wird eine hydraulische Bremskraftverstärkung aktiviert, welche die Ventile 171 und 172 sowie die Pumpe 131 und den Elektromotor 132 ansteuert. Zwischen den Zeitpunkten t₁ und t₂ steigen der Hinterrad-Bremsdruck 420 und der Vorderrad-Bremsdruck 430 im Wesentlichen übereinstimmend und linear an. Wie durch die Welligkeit in den Verläufen der Bremsdrücke 410 und 420 angedeutet, bewirken ein Ansteuerungsmuster des Elektromotors 132 und ein Förderverhalten der Pumpe 131, dass beide Druckverläufe leicht pulsierend sind. Der Druck 410 im Hauptzylinder steigt zwischen t₁ und t₂ langsamer an als vor dem Zeitpunkt t₁. Der Fahrer kann dies durch ein verändertes Widerstandsgefühl am mit dem Hauptzylinder 114 verbundenen Bremspedal 113 bemerken.

Zum Zeitpunkt t₂ hat der Druck 420 an den Hinterradbremsen 150 und 160 einen Wert erreicht, der einen Bremsschlupf an den Hinterradbremsen 150 und 160 so groß werden lässt, dass gerade noch keine Gefahr besteht, dass das Heck des Fahrzeugs nach rechts oder links ausbricht. Um ein Erreichen eines instabilen Fahr- bzw. Fahrzeugzustandes durch eine weiter gesteigerte Druckveränderung an den Hinterradbremsen 150 und 160 zu vermeiden, wird zum Zeitpunkt t₂ eine elektronische Bremskraftverteilung aktiviert, die den Bremsdruck 420 an den Hinterradbremsen 150 und 160 begrenzt. Dazu veranlasst, wie in den Fign. 1 und 2 veranschaulicht, die elektronische Bremskraftverteilung 220 die hydraulische Bremskraftverstärkung 230, die Pumpe 131 bzw. den Elektromotor 132 derart zu steuern, dass der Hinterrad-Bremsdruck 420 auf dem momentanen Wert verharrt. Der Vorderrad-Bremsdruck 430 unterliegt nicht der elektronischen Bremskraftverteilung 220, daher bleibt nur vom Druck 410 im Hauptzylinder 112 abhängig und wird nicht begrenzt.

Da durch die aktivierte elektronische Bremskraftverteilung 220 bereits zum Zeitpunkt t₂ bekannt ist, dass der Hinterrad-Bremsdruck 420 nicht weiter erhöht werden soll, können alternativ oder zusätzlich zur beschriebenen Pumpensteuerung die Ventile 171 und 172 beide in einen Sperrzustand überführt werden, so dass der Hinterrad-Bremsdruck 420 an den Hinterradbremsen 150 und 160 "eingesperrt" wird. Treibt der Elektromotor 132 nicht auch eine Pumpe des anderen Bremskreises (II.) an, so kann der Elektromotor 132 ebenfalls abgestellt werden. Durch diese Maßnahmen lassen sich unnötiger Verschleiß und Belästigungen durch Geräusche, Vibrationen und Rauhigkeit (noise, vibration and harshness, NVH) verringern.

Zwischen den Zeitpunkten t₂ und t₃ erfolgt ein weiteres Erhöhen des Drucks 410 im Hauptzylinder durch eine entsprechende Betätigung des Fahrers. In Abhängigkeit des Anstiegs des Drucks 410 im Hauptzylinder steigt auch der Vorderrad-Bremsdruck 430, während der Hinterrad-Bremsdruck 420 aufgrund der aktivierten Bremskraftverteilung konstant bleibt.

Zum Zeitpunkt t₃ hat der Druck 410 im Hauptzylinder einen maximalen Wert erreicht, was bedeutet, dass der Fahrer das Bremspedal mit einer nun konstant bleibenden Kraft F betätigt. Zwischen den Zeitpunkten t₃ und t₄ bleibt neben dem Hinterrad-Bremsdruck 420 auch der Vorderrad-Bremsdruck 430 im Wesentlichen konstant.

Zum Zeitpunkt t₄ werden zwei Ventile im Bremskreis I., die den Ventilen 171 und 172 im Bremskreis II. entsprechen, beide in einen Sperrzustand überführt, so dass auch im Bremskreis I. der Bremsdruck 430 an den Vorderradbremsen "eingesperrt" ist und der Bremsdruck 430 im weiteren Verlauf nicht mehr die durch die Pumpe verursachte Rauhigkeit zeigt Die Pumpe bzw. die Betätigung der Pumpe des Bremskreises I. kann zu diesem Zeitpunkt zur weiteren Verringerung von NVH und zur Vermeidung von unnötigem Verschleiß ebenfalls deaktiviert werden.

Bis zum Zeitpunkt t₅ bleiben die Drücke 410, 420 und 430 konstant. Danach beginnt der Fahrer, eine Betätigung des Bremspedals 113 zurückzunehmen, was sich an einem linear abnehmenden Druck 410 im Hauptzylinder 112 wiederspiegelt. Zwischen den Zeitpunkten t₅ und t₆ wird korrespondierend dazu auch der Vorderrad-Bremsdruck 430 abgebaut. Der Hinterrad-Bremsdruck 420 wird jedoch weiter konstant auf seinem Begrenzungswert gehalten.

Zum Zeitpunkt t₆ unterschreitet der Vorderrad-Bremsdruck 430 den für den Hinterrad-Bremsdruck 420 vorgegebenen Begrenzungswert. Zwischen den Zeitpunkten t₆ und t₇ erfolgt eine weitere Rücknahme des Drucks 410 im Hauptzylinder. Somit folgt der Hinterrad-Bremsdruck 420 dem Vorderrad-Bremsdruck 430 und fällt proportional zum Druck 410 im Hauptzylinder linear ab. Zwischen den Zeitpunkten t₇ und t₈ ist die hydraulische Bremskraftverstärkung wieder deaktiviert und eine Restfunktionalität des konventionellen Bremskraftverstärkers 114 wird ausgenützt. Der Druck 410 im Hauptzylinder entspricht in diesem Abschnitt wieder dem Hinterrad-Bremsdruck 420 und dem Vorderrad-Bremsdruck 430. Zum Zeitpunkt t₈ erreichen die Drücke 410, 420 und 430 den Wert Null.

Der Fachmann erkennt, dass das unter Bezugnahme auf die Fign. 1 bis 4 erläuterte Ausführungsbeispiel in vielfacher Weise modifiziert, ergänzt und abgewandelt werden kann. So lässt sich die Erfindung beispielsweise auch in einer elektro-hydraulischen Bremsanlage implementieren.

## Patentansprüche

1. Verfahren zum Durchführen einer elektronischen Bremskraftverteilung (220) bei einer mit einer hydraulischen Bremskraftverstärkung (230) ausgerüsteten Fahrzeug-Bremsanlage (200), wobei die hydraulische Bremskraftverstärkung (230) zur Unterstützung des Aufbaus eines von einem Fahrer angeforderten Bremsdrucks ausgebildet ist, umfassend die Schritte:
- Erfassen (320) eines eine elektronische Bremskraftverteilung (220) erfordernden Zustands; und
- Begrenzen (380) der Bremsdruck-Erzeugung der hydraulischen Bremskraftverstärkung (230) nach Maßgabe der elektronischen Bremskraftverteilung (220).

2. Verfahren nach Anspruch 1, **dadurch gekennzeichnet,**
**dass** die hydraulische Bremskraftverstärkung (230) ein elektrisches Ansteuern einer in die Fahrzeug-Bremsanlage (100) integrierten Hydraulikpumpe (131, 132) umfasst.

3. Verfahren nach Anspruch 2, **dadurch gekennzeichnet,**
**dass** das elektrische Ansteuern der Hydraulikpumpe (131, 132) zur hydraulischen Bremskraftverstärkung (230) bei Erreichen oder bei unmittelbar bevorstehendem Erreichen eines Aussteuerungspunkts eines in die Fahrzeug-Bremsanlage (100) integrierten Unterdruck- oder pneumatischen Bremskraftverstärkers (114) erfolgt.

4. Verfahren nach einem der Ansprüche 2 oder 3, **dadurch gekennzeichnet,**
**dass** die hydraulische Bremskraftverstärkung (230) ein elektrisches Ansteuern eines Ventils (171) umfasst, welches eine Hochdruckseite der Hydraulikpumpe (131, 132) von einem fahrerbetätigbaren Hauptzylinder (112) hydraulisch trennt und/oder dass die hydraulische Bremskraftverstärkung (230) ein elektrisches Ansteuern eines Ventils (172) umfasst, welches eine Niederdruckseite der Hydraulikpumpe (131, 132) mit einem fahrerbetätigbaren Hauptzylinder (112) hydraulisch verbindet.

5. Verfahren nach einem der Ansprüche 2 bis 4, **dadurch gekennzeichnet,**
**dass** das Begrenzen (380) der Bremsdruck-Erzeugung der hydraulischen Bremskraftverstärkung (230) das Erzeugen eines geringeren Unterstützungsbremsdrucks seitens der Hydraulikpumpe (131, 132) im Vergleich zu einem eine elektronische Bremskraftverteilung (220) nicht erfordernden Zustand umfasst.

6. Verfahren nach einem der vorhergehenden Ansprüche, **dadurch gekennzeichnet,**
**dass** im Rahmen der elektronischen Bremskraftverteilung (220) achsweise unterschiedliche Bremsdrücke (420, 430) eingestellt werden, wobei das Begrenzen (380) des Bremsdruck-Aufbaus der hydraulischen Bremskraftverstärkung (230) zumindest an einer Fahrzeug-Hinterachse oder an mehreren Fahrzeug-Hinterachsen durchgeführt wird.

7. Verfahren nach einem der vorhergehenden Ansprüche, **dadurch gekennzeichnet,**
**dass** das Erfassen eines eine elektronische Bremskraftverteilung (220) erfordernden Fahrzeugzustands ein Detektieren eines achsweise unterschiedlichen Bremsschlupfes umfasst.

8. Verfahren nach einem der vorhergehenden Ansprüche, **dadurch gekennzeichnet,**
**dass** die elektronische Bremskraftverteilung (220) der hydraulischen Bremskraftverstärkung (230) ein Drucksignal bereitstellt, welches unterhalb eines Begrenzungsdrucks einem Bremsdruck in einem fahrerbetätigbaren Hauptzylinder (112) entspricht.

9. Computerprogrammprodukt mit Programmcodemitteln zur Durchführung eines Verfahrens nach einem der vorangegangenen Ansprüche, wenn das Computerprogrammprodukt auf einer Verarbeitungseinheit (220, 230) läuft.

10. Computerprogrammprodukt nach dem vorigen Anspruch, wenn es auf einem computerlesbaren Datenträger gespeichert ist.

11. Fahrzeug-Bremsanlage, umfassend:
- einen Bremskraftverstärker (230), der zur Unterstützung des Aufbaus eines von einem Fahrer angeforderten Bremsdrucks ausgebildet ist; und
- einen elektronischen Bremskraftverteiler (220) mit einem Detektor (210) zum Erfassen eines eine elektronische Bremskraftverteilung erfordernden Zustands,
**gekennzeichnet dadurch, dass** der Bremskraftverstärker ein hydraulischer Bremskraftverstärker (230) ist und durch einen Begrenzer (225) zum Begrenzen der Bremsdruck-Erzeugung der hydraulischen Bremskraftverstärkung (230) nach Maßgabe der elektronischen Bremskraftverteilung (220).

12. Fahrzeug-Bremsanlage nach Anspruch 11, **dadurch gekennzeichnet,**
**dass** der hydraulische Bremskraftverstärker (230) zur Ansteuerung eine Hydraulikpumpe (131, 132) ausgebildet ist.

13. Fahrzeug-Bremsanlage nach Anspruch 11 oder **dadurch gekennzeichnet,**
**dass** sie ein Ventil (171) umfasst, welches elektrisch ansteuerbar ist, um eine Hochdruckseite der Hydraulikpumpe (131, 132) von einem fahrerbetätigbaren Hauptzylinder (112) hydraulisch zu trennen und/oder dass sie ein Ventil (172) umfasst, welches elektrisch ansteuerbar ist, um eine Niederdruckseite der Hydraulikpumpe (131, 132) mit einem fahrerbetätigbaren Hauptzylinder (112) hydraulisch zu verbinden.

14. Fahrzeug-Bremsanlage nach einem der Ansprüche 11 bis 13, **dadurch gekennzeichnet,**
**dass** der hydraulische Bremskraftverstärker (230) ein erstes Steuergerät und der elektronische Bremskraftverteiler (220) ein zweites Steuergerät umfasst, wobei zwischen dem ersten Steuergerät und dem zweiten Steuergerät eine Schnittstelle zur Übermittlung von Bremsdruck-Begrenzungsbefehlen vom zweiten Steuergerät an das erste Steuergerät vorgesehen ist.

15. Fahrzeug-Bremsanlage nach einem der Ansprüche 11 bis 14, **dadurch gekennzeichnet, dass** ein Steuermodul des hydraulischen Bremskraftverstärkers (230) und ein Steuermodul des elektronischen Bremskraftverteilers (220) unterschiedliche Funktionsmodule innerhalb eines gemeinsamen Steuergeräts sind.

## Claims

1. A method of effecting electronic brake force distribution (220) in a vehicle brake system (200) equipped with hydraulic brake boosting (230), wherein the hydraulic brake boosting (230) is designed to assist the build-up of a brake pressure requested by a driver, comprising the steps:
- detecting (320) a state requiring an electronic brake force distribution (220); and
- limiting (380) the brake pressure generation of the hydraulic brake boosting (230) in accordance with the electronic brake force distribution (220).

2. The method according to claim 1, **characterized in that** the hydraulic brake boosting (230) comprises electrical actuation of a hydraulic pump (131, 132) that is integrated into the vehicle brake system (100).

3. The method according to claim 2, **characterized in that** the electrical actuation of the hydraulic pump (131, 132) for the hydraulic brake boosting (230) is effected upon attainment of or upon immediately impending attainment of a maximum gain of a vacuum or pneumatic brake booster (114) that is integrated into the vehicle brake system (110).

4. The method according to claim 2 or 3, **characterized in that** the hydraulic brake boosting (230) comprises electrical actuation of a valve (171) that hydraulically separates a high-pressure side of the hydraulic pump (131, 132) from a driver-actuable master cylinder (112) and/or that the hydraulic brake boosting (230) comprises electrical actuation of a valve (172) that hydraulically connects a low-pressure side of the hydraulic pump (131, 132) to a driver-operable master cylinder (112).

5. The method according to one of claims 2 to 4, **characterized in that** the limiting (380) of the brake pressure generation of the hydraulic brake boosting (230) comprises the generation of a lower assisting brake pressure by the hydraulic pump (131, 132) in comparison to a state not requiring an electronic brake force distribution (220).

6. The method according to one of the preceding claims, **characterized in that** in the course of the electronic brake force distribution (220) brake pressures (420, 430) that differ from axle to axle are adjusted, wherein the limiting (380) of the brake pressure build-up of the hydraulic brake boosting (230) is effected at least at one vehicle rear axle or at a plurality of vehicle rear axles.

7. The method according to one of the preceding claims, **characterized in that** the detection of a vehicle state requiring an electronic brake force distribution (220) comprises detecting a wheel slip that differs from axle to axle.

8. The method according to one of the preceding claims, **characterized in that** the electronic brake force distribution (220) supplies the hydraulic brake boosting (230) with a pressure signal, which below a limit pressure corresponds to a brake pressure in a driver-operable master cylinder (112).

9. A computer program product comprising program code means for performing a method according to one of the preceding claims when the computer program product runs on a processing unit (220, 230).

10. The computer program product according to the preceding claim, when it is stored in a computer-readable data carrier.

11. A vehicle brake system, comprising:
- a brake booster (230) that is designed to assist the build-up of a brake pressure requested by a driver; and
- an electronic brake force distributor (220) comprising a detector (210) for detecting a state requiring an electronic brake force distribution, **characterized in that** the brake booster is a hydraulic brake booster (230) and by a limiter (225) for limiting the brake pressure generation of the hydraulic brake booster (230) in accordance with the electronic brake force distribution (220).

12. The vehicle brake system according to claim 11, **characterized in that** the hydraulic brake booster (230) is designed to actuate a hydraulic pump (131, 132).

13. The vehicle brake system according to claim 11 or 12, **characterized in that** it comprises a valve (171) that is adapted to be electrically actuated in order to hydraulically separate a high-pressure side of the hydraulic pump (131, 132) from a driver-operable master cylinder (112) and/or that it comprises a valve (172) that is adapted to be electrically actuated in order to hydraulically connect a low-pressure side of the hydraulic pump (131, 132) to a driver-operable master cylinder (112).

14. The vehicle brake system according to one of claims 11 to 13, **characterized in that** the hydraulic brake booster (230) comprises a first control unit and the electronic brake force distributor (220) comprises a second control unit, wherein between the first control unit and the second control unit an interface is provided for communicating pressure limiting commands from the second control unit to the first control unit.

15. The vehicle brake system according to one of the claims 11 to 14, **characterized in that** a control module of the hydraulic brake booster (230) and a control module of the electronic brake force distributor (220) are different functional modules within a common control unit.

## Revendications

1. Procédé pour la mise en oeuvre d'une répartition électronique de force de freinage (220) dans un système de freinage de véhicule (200) équipé d'un dispositif de freinage hydraulique assisté (230), le dispositif de freinage hydraulique assisté (230) étant conçu pour assister l'établissement d'une pression de freinage demandée par le conducteur, le procédé comprenant les étapes suivantes :
- relevé (320) d'un état nécessitant une répartition électronique de force de freinage (220) ; et
- limitation (380) de la production de la pression de freinage du dispositif de freinage hydraulique assisté (230) conformément à la répartition électronique de force de freinage (220).

2. Procédé selon la revendication 1,
**caractérisé en ce que** le dispositif de freinage hydraulique assisté (230) comprend une commande électrique d'une pompe hydraulique (131, 132) intégrée au système de freinage de véhicule (100).

3. Procédé selon la revendication 2,
**caractérisé en ce que** la commande électrique de la pompe hydraulique (131, 132) pour le dispositif de freinage hydraulique assisté (230) s'effectue lorsqu'on atteint, ou lorsqu'on est sur le point d'atteindre un point de fonctionnement maximum d'un servofrein pneumatique ou à dépression (114) intégré au système de freinage de véhicule (100).

4. Procédé selon l'une des revendications 2 ou 3,
**caractérisé en ce que** le dispositif de freinage hydraulique assisté (230) comprend la commande électrique d'une vanne (171) qui isole hydrauliquement un côté haute pression de la pompe hydraulique (131, 132) d'un maître-cylindre (112) pouvant être actionné par le conducteur, et/ou **en ce que** le dispositif de freinage hydraulique assisté (230) comprend la commande électrique d'une vanne (172) qui relie hydrauliquement un côté basse pression de la pompe hydraulique (131, 132) à un maître-cylindre (112) pouvant être actionné par le conducteur.

5. Procédé selon l'une des revendications 2 à 4,
**caractérisé en ce que** la limitation (380) de la production de la pression de freinage du dispositif de freinage hydraulique assisté (230) comprend la production d'une pression de freinage d'assistance moindre de la part de la pompe hydraulique (131, 132), par rapport à un état ne nécessitant pas une répartition électronique de force de freinage (220).

6. Procédé selon l'une des revendications précédentes,
**caractérisé en ce que** dans le cadre d'une répartition électronique de force de freinage (220), on règle des pressions de freinage différentes (420, 430) par essieu, la limitation (380) de l'établissement de la pression de freinage du dispositif de freinage hydraulique assisté (230) étant effectuée au moins sur un essieu arrière de véhicule ou sur plusieurs essieux arrière de véhicule.

7. Procédé selon l'une des revendications précédentes,
**caractérisé en ce que** le relevé d'un état nécessitant une répartition électronique de force de freinage (220) comprend la détection d'un glissement au freinage différent par essieu.

8. Procédé selon l'une des revendications précédentes,
**caractérisé en ce que** la répartition électronique de force de freinage (220) du dispositif de freinage hydraulique assisté (230) fournit un signal de pression qui, en-dessous d'une pression de limitation, correspond à une pression de freinage dans un maître-cylindre (112) pouvant être actionné par le conducteur.

9. Produit de programme d'ordinateur comprenant des moyens de code de programme pour la mise en oeuvre d'un procédé selon l'une des revendications précédentes, lorsque le produit de programme d'ordinateur tourne sur une unité de traitement (220, 230).

10. Produit de programme d'ordinateur selon la revendication précédente, lorsqu'il est mémorisé sur un support de données pouvant être lu par ordinateur.

11. Système de freinage de véhicule, comprenant :
- un dispositif de freinage assisté (230) qui est conçu pour assister l'établissement d'une pression de freinage demandée par le conducteur ; et
- un dispositif de répartition électronique de force de freinage (220) comprenant un détecteur (210) pour relever un état nécessitant une répartition électronique de force de freinage,
**caractérisé en ce que** le dispositif de freinage assisté est un dispositif de freinage hydraulique assisté (230), et par un limiteur (225) pour limiter la production de la pression de freinage de l'assistance hydraulique de force de freinage (230) selon la répartition électronique de force de freinage (220).

12. Système de freinage de véhicule selon la revendication 11,
**caractérisé en ce que** le dispositif de freinage hydraulique assisté (230) est conçu pour commander une pompe hydraulique (131, 132).

13. Système de freinage de véhicule selon la revendication 11 ou la revendication 12,
**caractérisé en ce qu'**elle comprend une vanne (171) qui peut être commandée électriquement, pour isoler hydrauliquement un côté haute pression de la pompe hydraulique (131, 132) d'un maître-cylindre (112) pouvant être actionné par le conducteur, et/ou **en ce qu'**elle comprend une vanne (172) qui peut être commandée électriquement, pour relier hydrauliquement un côté basse pression de la pompe hydraulique (131, 132) à un maître-cylindre (112) pouvant être actionné par le conducteur.

14. Système de freinage de véhicule selon l'une des revendications 11 à 13,
**caractérisé en ce que** le dispositif de freinage hydraulique assisté (230) comprend un premier organe de commande et le dispositif de répartition électronique de force de freinage (220) comprend un deuxième organe de commande, une interface étant prévue entre le premier organe de commande et le deuxième organe de commande, pour la transmission d'ordres de limitation de la pression de freinage du deuxième organe de commande au premier organe de commande.

15. Système de freinage de véhicule selon l'une des revendications 11 à 14,
**caractérisé en ce qu'**un module de commande du dispositif de freinage hydraulique assisté (230) et un module de commande du dispositif de répartition électronique de force de freinage (220) sont des modules fonctionnels différents à l'intérieur d'un organe de commande commun.
